# EUROPÄISCHE PATENTSCHRIFT

(11) **EP 3 245 413 B1**
(45) Veröffentlichungstag und Bekanntmachung des Hinweises auf die Patenterteilung: **14.07.2021**
(21) Anmeldenummer: 15808334.5
(22) Anmeldetag: 12.11.2015
(51) Int. Cl.: F16B 37/06, B29C 65/64, F16B 37/12

(54) **METALLISCHES HALTEELEMENT ZUM EINLEITEN EINES DREHMOMENTS IN EIN KUNSTSTOFFGEHÄUSE**
METAL HOLDING ELEMENT FOR INTRODUCING A TORQUE INTO A PLASTIC HOUSING
ÉLÉMENT DE RETENUE MÉTALLIQUE PERMETTANT D'INDUIRE UN COUPLE DANS UN BOÎTIER EN MATIÈRE PLASTIQUE

(30) Priorität: 15.01.2015 DE 102015200505
(43) Veröffentlichungstag der Anmeldung: 22.11.2017
(73) Patentinhaber: Continental Automotive GmbH, 30165 Hannover (DE)
(72) Erfinder: SPLITT, Michael, 93080 Pentling (DE)
(74) Vertreter: Continental Corporation
(86) Internationale Anmeldenummer: PCT/DE2015/200499
(87) Internationale Veröffentlichungsnummer: WO 2016/112886

(56) Entgegenhaltungen:
- DE-A1-102012 215 587
- DE-U1- 29 718 724
- JP-A- 2000 297 810
- JP-A- 2011 239 600

## Beschreibung

Die Erfindung betrifft ein metallisches Halteelement zum Einpressen in eine Öffnung eines Kunststoffgehäuses und Aufnehmen bzw. Einleiten eines Drehmoments im Kunststoffgehäuse sowie ein entsprechendes Kunststoffgehäuse.

Metallische Halteelemente in Kunststoffgehäusen dienen der Aufnahme bzw. Weitergabe von Kräften, beispielsweise auch Drehmomenten bei der Befestigung des Kunststoffgehäuses an einem Träger oder eines Deckels an diesem Kunststoffgehäuse. Generell sollen derartige Halteelemente eine hinreichende Verankerung in dem umgebenden Kunststoffgehäuse ermöglichen, ohne dass dabei die Gefahr besteht, dass umliegende Kunststoffgehäuse beim Einbringen des Halteelements oder der Kraftwirkung auf das Halteelement zu schwächen oder gar zu zerstören. Andererseits sind die Halteelemente so zu konstruieren, dass möglichst wenig metallischer Werkstoff und damit letztlich auch Gewicht benötigt wird und diese zudem kostengünstig hergestellt werden können.

So ist beispielsweise aus der DE 10 2012 215 587 A1 ein Lasteinleitungselement zu entnehmen, wobei dort die Mantelfläche mit einer Kontur versehen wird, welche Einkerbungen aufweist.

Aus der EP 1468199 B1 ist eine Stützhülse sowie der EP 2368051 B1 ein Befestigungsmittel zu entnehmen, welche ebenfalls vergleichbare Formen aufweisen. Die US 2005/0095078 zeigt zudem einen Blindniet, welcher bereits in seiner Grundform Hinterschnitte aufweist, welche durch beidseitige Kraftwirkung dann noch weiter verformt werden.

Aus der DE 10 2009 039 817 A1 ist ein selbststanzendes Mutterelement zum Einpressen in ein Metallblechteil zu entnehmen, bei welchem das Mutterelement selbststanzend eine Öffnung in das Metallblech stanzt und das verdrängte Material des Blechs dabei in eine am Mutterelement vorgesehene umlaufende Rille und damit einen Hinterschnitt verformt. Halteelemente mit solchen Einkerbungen sind fertigungstechnisch aufwändig herzustellen und daher teuer und eine derart starke Umformung, wie diese zum Verdrängen des Kunststoffmaterials in derartige Hinterschnitte notwendig wäre, beim Einpressen in Kunststofföffnungen, insbesondere Kunststoffdome mit entsprechend beschränkter Wandstärke nicht möglich bzw. besteht die Gefahr, dass die Wände reißen würden.

Die JP 2011 239600 A beschreibt eine elektrische Anschlussdose zur Anordnung in einem Kraftfahrzeug. Dabei umfasst die Anschlussdose ein Kunststoffgehäuse mit mehreren im Wesentlichen quadratisch ausgebildeten Öffnungen, in die jeweils eine metallische Anschlussmutter zum Aufnehmen bzw. Einleiten eines Drehmoments eingepresst ist. Die metallische Anschlussmutter weist eine korrespondierende quadratische Grundform mit vier untereinander über geradlinige Kanten miteinander verbundenen Hauptecken auf. An der die jeweilige Öffnung in ihrer axialen Erstreckung umgebenden Wandung des Kunststoffgehäuses sind jeweils mehrere als Vorsprünge ausgebildete Presspassungsrippen angeordnet, die sich in axialer Richtung entlang der Öffnung bis hin zu einer Bodenfläche der Öffnung erstrecken, wobei die jeweilige Anschlussmutter mittels der Presspassungsrippen in die Öffnung eingepresst ist.

Außerdem ist aus der DE 103 19 978 A1 ein metallischer Einsatz zu entnehmen, bei welcher der Einsatz gerade keine Drehmomente aufnehmen soll, sondern mit einer Langlochform einen Toleranzausgleich zwischen einer Mehrzahl entsprechend auf einer Linie angeordneter Bohrungen ermöglicht. Der Querschnitt des Lochs im Kunststoff ist entsprechend an den Querschnitt des Einsatzes angepasst.

Zudem soll möglichst ein bleifreies Material eingesetzt werden können, um die Umweltbelastung zu reduzieren, verlangen einige der vorbekannten Formgebungen nun jedoch eine spanende Verarbeitung und damit einen Bleianteil im Material des Halteelements.

Außerdem vereinfacht ist die Fertigung des Kunststoffgehäuses, wenn das Halteelement nicht mit dem Material des Kunststoffgehäuses als Einlegeteil umspritzt werden muss, sondern in einer Öffnung nachträglich einfach eingepresst werden kann. Dafür sind beispielsweise Halteelemente mit einem zylinderförmigen Haltebereich bekannt.

Dann muss jedoch ein solches Halteelement mit einem höheren Übermaß in eine entsprechende Öffnung des Kunststoffgehäuses eingepresst werden, was wiederum den erforderlichen Rand im Kunststoffgehäuse um die Öffnung herum erhöht.

Insbesondere bei einer Ausbildung eines aus dem Kunststoffgehäuse hervorstehenden Kunststoff-Doms zur Aufnahme des Halteelements ist dies wiederum äußerst unerwünscht, da die Breite eines solchen Kunststoff-Doms die Größe des Kunststoffgehäuses im Vergleich zu einer in den Kunststoffgehäuse anzuordnenden Leiterplatte erhöht. Sofern die Leiterplatte zu dem ebenfalls mit dem Kunststoff-Dom verspannt werden soll, würde die für elektrische Bauelemente verfügbare Leiterplattenfläche ebenfalls reduziert.

Diese ganzen Anforderungen sind also zueinander im Widerspruch stehend und eine Abwägung entsprechend erforderlich. Die Aufgabe der vorliegenden Erfindung ist es, ein besonders geeignetes Halteelement vorzustellen.

Diese Aufgabe wird durch die Merkmale der unabhängigen Ansprüche gelöst. Vorteilhafte Weiterbildungen der Erfindung ergeben sich aus den Unteransprüchen, wobei auch Kombinationen und Weiterbildungen einzelner Merkmale miteinander denkbar sind.

Ein wesentlicher Gedanke der Erfindung besteht darin, dass das Haltelement im Haltebereich 3 Hauptecken aufweist, welche untereinander über konvexe Kanten miteinander verbunden sind und dort gerade keine konkaven Einschnitte oder Einkerbungen oder gar Hinterschnitte aufweist.

Eine solche Formgebung kann vorzugsweise aus einem bleifreien, metallischen Material und durch Kaltschlagmassivumformung hergestellt werden. Die Hauptecken hintergreifen dabei jeweils einen Teil des Kunststoffmaterials im Randbereich um das Halteelement, ermöglichen die gegenüber einem theoretischen Kreisdurchmesser zurückversetzten Kantenbereiche jedoch einen entsprechenden Kunststoffrand, beim Einpressen eines solchen Halteelements insbesondere auch ein Verdrängen eines Teils des Kunststoffmaterials von den Hauptecken in diesem Bereich der Kanten.

Um eine Schraubbefestigung zu ermöglichen, weist das Halteelement eine der drei Alternativen auf:
a) eine zylindrische Bohrung (13) mit einem vorgegebenen Untermaß zur Aufnahme einer selbstschneidenden Schraube (3) oder
b) ein Innengewinde oder
c) einen mit dem Halteelement verbundenen Zapfen (17) mit einem Außengewinde.

Würde man die Anzahl der Hauptecken noch weiter erhöhen, beispielsweise auf 6 Hauptecken oder gar noch mehr ausweichen wollen, wird die Verankerung zunehmend nur noch durch die Haftreibung zwischen Halteelement und dem umgebenden Rand des Kunststoffmaterials erfolgen.

Das Halteelement weist genau 3 Hauptecken auf, wobei die Kanten jeweils durch eine oder mehrere stumpfwinklige Zwischenecken konvex gewölbt geformt sind.

Die Zwischenecken sind vom Winkel her größer, also noch stumpfwinkliger als die 120 Grad der drei Hauptecken und beabstandet von den Hauptecken angeordnet. Dadurch kann das Halteelement auch bei einem vorgegebenen Durchmesser einer Öffnung im Inneren des Halteelements und einer vorgegebenen minimalen Wanddicke mit einem kleineren Eckmaß realisiert werden.

Grundsätzlich wäre auch eine konvexe Kurvenform der Kante denkbar, fertigungstechnisch jedoch aufwändiger.

Ein solches Haltelement kann insbesondere mit einer zylindrischen Bohrung mit einem vorgegebenen Untermaß zur Aufnahme einer selbstschneidenden Schraube versehen sein und entsteht die maßgebliche Drehmomentbelastung damit insbesondere beim Eindrehen dieser Schraube und der Furchenbildung in dem entsprechenden Randbereich um die Öffnung im Halteelement.

Alternativ kann die Öffnung auch bereits mit einem fertigen Innengewinde versehen sein und mit einer herkömmlichen Schraube die Befestigung erfolgen. Eine weitere Alternative entsteht, indem das Halteelement mit einem Zapfen mit einem Außengewinde verbunden ist, auf denen dann beispielsweise einem Motor auf geschraubt werden kann.

Die Hauptecken sind vorzugsweise abgerundet, wobei vorzugsweise der Rundungsbereich der Hauptecke maximal 10% der Länge der Kante zwischen den Hauptecken beträgt.

Gerade bei einer besonders bevorzugten Weiterbildung als ein in einer Öffnung in ein Kunststoffgehäuse einpressbares Halteelement weist in Richtung der Mittelachse in Einführrichtung das Halteelement einen Einführbereich mit einem sich nach innen zur Mittelachse hin verjüngenden Außenumfang auf, wodurch ein solches Halteelement sich beim Einführen selbst zentrieren und gewisse Fertigungstoleranzen ausgleichen kann.

Insbesondere auf der entgegengesetzten Seite kann das Halteelement in Richtung der Mittelachse einen Randbereich mit einem von der Mittelachse nach außen verlaufenden Rand aufweist, dessen Außenumfang größer ist als im Haltebereich. Dieser Rand vergrößert beispielsweise die Haltefläche oder Auflagefläche für einer Leiterplatte oder einen Gehäusedeckel und kann zudem als Anschlag beim Einpressen des Halteelements in das Kunststoffgehäuse dienen.

Neben dem Halteelement als solchen wird als ebenfalls verkehrsfähige eigenständige Einheit das Kunststoffgehäuse mit einem Haltelement nach einem der vorangehenden Ansprüche beansprucht. Eine besonders bevorzugte Weiterbildung bzw. Vereinfachung ergibt sich dadurch, dass das Kunststoffgehäuse einer vor dem Einpressen des Halteelements zylinderförmige Einpressöffnung aufweist, da eine solche zylinderförmigen Einpressöffnung natürlich sehr einfach herstellbar ist, andererseits die Formgebung dieses Halteelements es ermöglicht, es trotzdem in eine solche zylinderförmige, also im Querschnitt kreisrunde Einpressöffnung einzupressen.

Im Gegensatz zum Einpressen von zylindrischen Metallbolzen in ein Kunststoffgehäuse kann durch ein erfindungsgemäßes Halteelement das Flächenquerschnittsmaß des Halteelements gegenüber dem Flächenquerschnittsmaß der Einpressöffnung vor dem Einpressen mit einem geringeren Übermaß ausgeführt werden und ergibt sich dadurch, dass die Einpressöffnung im Haltebereich nach dem Einpressen des Halteelements ein Flächenquerschnittsmaß aufweist, welches maximal 7% größer ist als das Flächenquerschnittsmaß der Einpressöffnung vor dem Einpressen, vorzugsweise weniger als 3,5% größer ist.

Dadurch verringert sich die mechanische Belastung des Kunststoffgehäuses um das Halteelement herum und kann bei einem Einpressen in einen aus dem Kunststoffgehäuse hervorstehenden Kunststoff-Dom diese entsprechend mit einem geringen Durchmesser bzw. niedrigerer Wandstärke realisiert werden.

So wird es möglich, dass das Flächenquerschnittsmaß der Einpressöffnung (21) vor dem Einpressen zwischen 25 bis 60 % des Flächenquerschnittsmaß des Kunststoffdom (22) entspricht, also ein verhältnismäßig großes Halteelement in Bezug auf das Flächenquerschnittsmaß des Kunststoffdoms verwendet werden kann, ohne dass die Gefahr besteht, dass die Wandung des Kunststoffdoms reißt.

Die Erfindung wird nachfolgend anhand von Ausführungsbeispielen unter Bezugnahme auf die Figuren näher beschrieben. Es zeigen:
- Figur 1: Schnittansichten durch ein Halteelement gemäß einer 1. Ausgestaltung
- Figur 2a: Kunststoffgehäuse vor dem Einbau des Halteelements
- Figur 2B: Kunststoffgehäuse mit eingebautem Halteelement
- Figur 2C: Kunststoffgehäuse mit entferntem Halteelement
- Figur 3: Halteelement und Kunststoffgehäuse bei 3 Hauptecken
- Figur 4: ein nicht zur Erfindung gehörendes Halteelement und Kunststoffgehäuse bei 4 Hauptecken
- Figur 5: ein nicht zur Erfindung gehörendes Halteelement und Kunststoffgehäuse bei 5 Hauptecken
- Figur 6: unterschiedliche Kantenformen und dadurch entstehende Maße
- Figur 7: Schnitt durch den Montagebereich eines Kunststoffgehäuses mit eingebautem Halteelement
- Figur 8: Halteelement mit angeformtem Bolzen

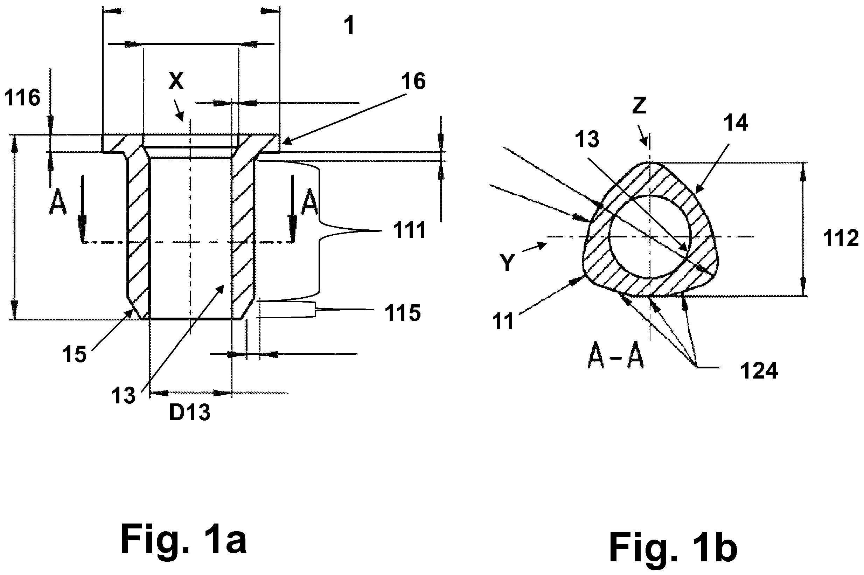

Die Figur 1A zeigt ein 1. Ausführungsbeispiel des Halteelements mit einem Längsschnitt entlang der Mittelachse X. Das Halteelement 1 weist dabei einen Haltebereich 111 auf. An diesen Haltebereich 111 schließt sich in diesem bevorzugten Ausführungsbeispiel auf der hier oberen Seite ein Randbereich 116 mit einem umlaufenden Rand 16 an.

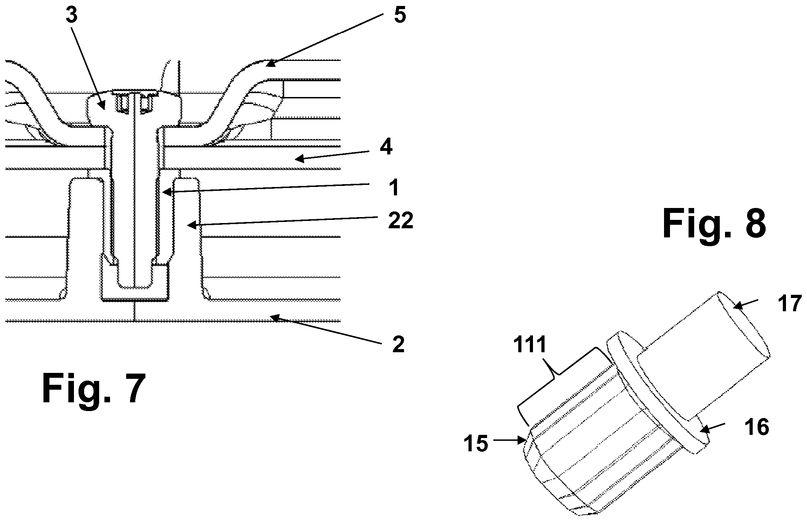

Diese umlaufende Rand 116 kann zum einen als Anschlag dienen, wenn das Halteelement in eine entsprechende Öffnung eines Kunststoffgehäuses eingepresst wird. Andererseits kann dieser Rand dazu dienen, eine vergrößerte Auflagefläche beispielsweise für eine Leiterplatte 4 bzw. ein dort ebenfalls zur Befestigung des Gehäuseteil, in Figur 7 die dort gezeigte Grundplatte 5 entsprechend großflächig aufzulegen. Die Größe und Form dieses Rands 16 ist dabei weit gehend frei wählbar und kann beispielsweise auch kreisrund gehalten sein und muss nicht wie nachfolgend noch näher zu diskutierenden Hauptecken 11 des Haltebereichs 111 aufweisen.

Auf der in Figur 1A unteren Seite in Richtung der Mittelachse weist das Halteelement 1 einen Einführbereich (115) mit einem sich nach Innen zur Mittelachse (X) hin mit der erkennbaren Schräge (15) einen verjüngenden Außenumfang auf. Diese Einführbereich 115 an der Einpressseite dient dem vereinfachten Einführen in die Einpressöffnung des Kunststoffgehäuses. Im Gegensatz zu der nachfolgend noch im Detail näher diskutierten Außenumfangform des Halteelements 1 im Haltebereich 111 kann der Einführbereich 115 bis zu einem kreisrunden Außenumfang verjüngt sein.

Figur 1B zeigt nun den in Figur 1A bereits angedeuteten Querschnitt durch den Haltebereich 111, an welchem hier genau drei Hauptecken (11) ausgeführt sind, welche untereinander über Kanten (12) miteinander verbunden sind.

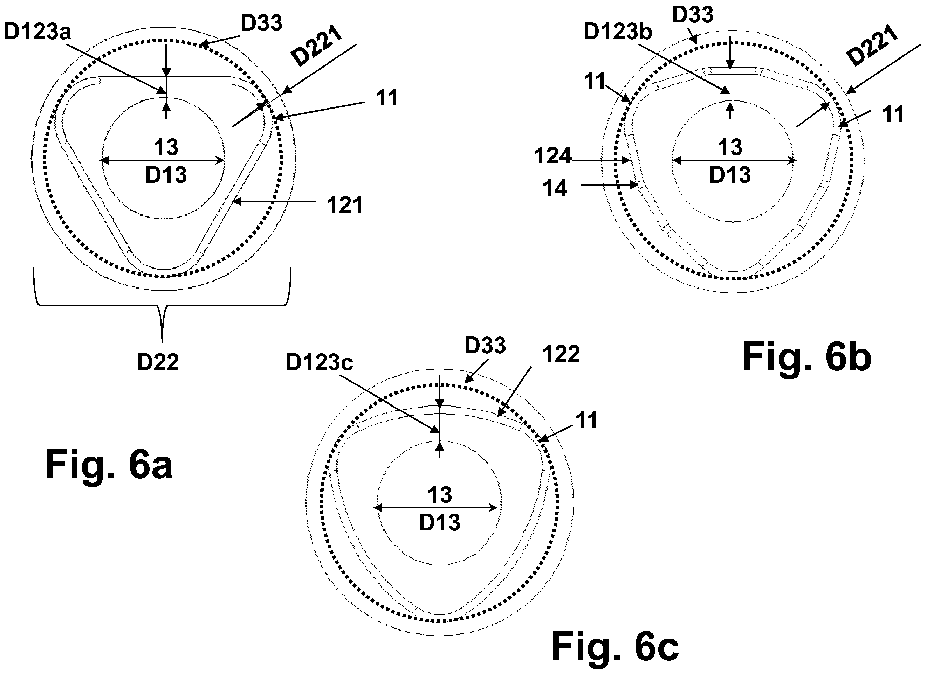

Die Figur 1B skizziert bereits eine besonders bevorzugte Ausgestaltung dieser Kanten 12, nämlich mit jeweils 2 stumpfwinkligen Zwischenecken (14), so dass Gesamtform der Kanten leicht nach außen, also konvex gewölbt geformt ist. Es sei aber ausdrücklich darauf hingewiesen, dass grundsätzlich auch andere konvexe Kantenformen oder beispielsweise nur eine stumpfwinklige Zwischenecke (14) denkbar sind. Aufgrund der fertigungstechnischen Nachteile sind in diesem Haltebereich 111 jedoch gerade keine Einschnitte oder gar Hinterschnitte in Richtung der Mittelachse X vorgesehen. Die spezielle Formgebung der Kanten wird auch noch ausführlicher im Zusammenhang mit Figur 6 diskutiert.

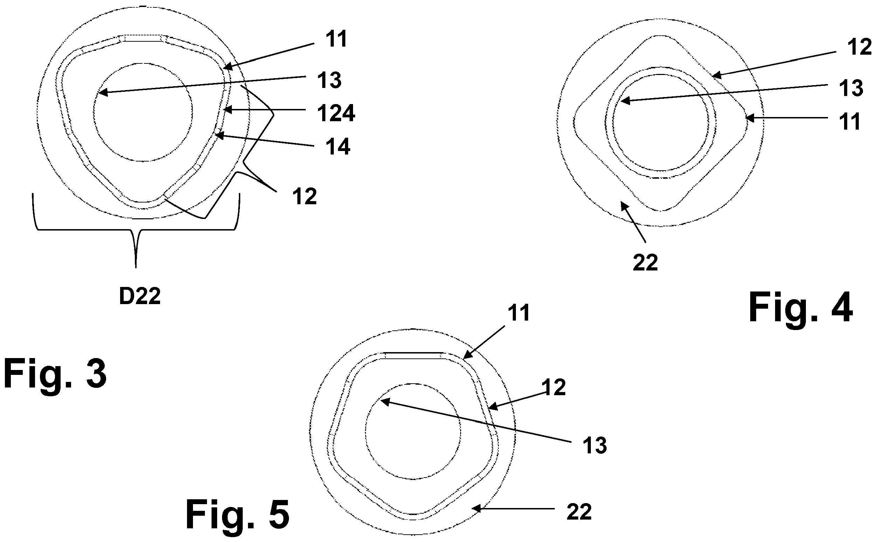

Die mögliche alternative Anzahl der Hauptecken 11 wird bezugnehmend auf die Figuren 3,4 und 5 ebenfalls nachfolgend noch näher diskutiert.

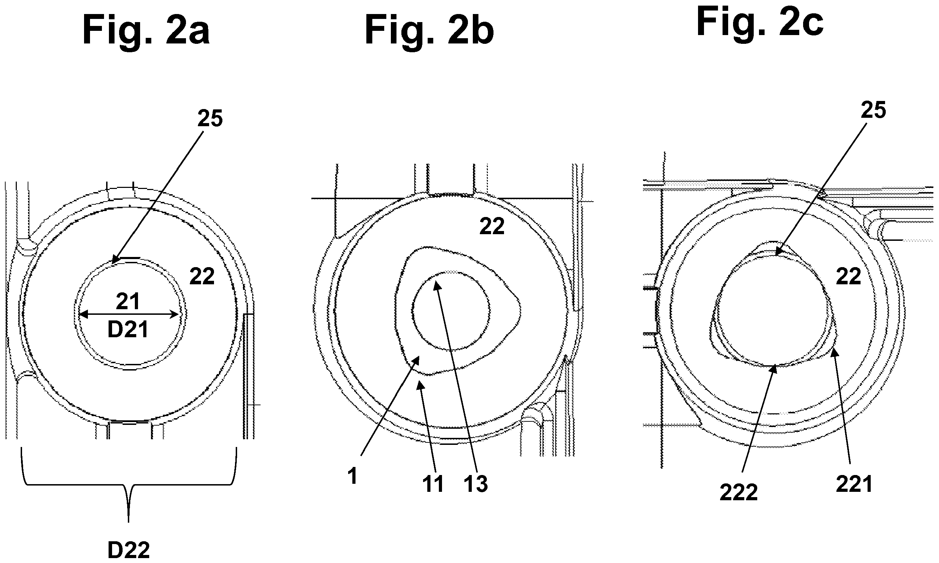

Zunächst aber soll bezugnehmend auf die Figuren 2A bis 2C eine besonders bevorzugte Ausgestaltung des Kunststoffgehäuses 2 erläutert werden. Figur 2A zeigt dabei eine Draufsicht auf einen so genannten Kunststoffdom, also einen aus dem Kunststoffgehäuse hervorragenden im Wesentlichen hohlzylindrischen Körper, welcher beispielsweise in Figur 7 im Querschnitt gezeigt ist.

Dieser Kunststoffdom 22 weist eine Öffnung 21 auf, welche vorzugsweise eine kreisrunde Form und zumindest in dem im Haltebereich 111 des Halteelements eines entsprechenden Bereichs einen Durchmesser D21 aufweist. Am bezüglich Figur 7 unteren Ende des Kunststoffdoms 22 kann sich die Öffnung auch für engen und einen zusätzlichen Rand 25 bilden, welcher jedoch in Einführrichtung so tief liegt, dass das Halteelement 1 mit seinem Haltebereich 111 vollständig eingeführt werden kann.

Der Kunststoffdom 22 weist einen Außendurchmesser D22 auf und ergibt sich entsprechend die Wandstärke des Doms als (D22-D21)/2. Der Innendurchmesser D 21 des Doms ist dabei um ein vorgegebenes Maß kleiner als das in Figur 1B skizzierte Eckmaß 112 zwischen der Hauptecke 11 und der jeweils gegenüberliegenden Kante 12, so dass es zu einer Presspassung des Halteelements 1 kommt, wobei dabei Kunststoffmaterial am Rand der Öffnung 21 nicht nur in Einpressrichtung, sondern auch in die seitlich der Hauptecken 11 befindlichen Wandbereiche der Öffnung 21 verpresst wird. Dadurch ist zum einen die Belastung des Kunststoffdoms 22 geringer als beim Einpressen eines runden Bolzens mit einem dem Eckmaß 112 entsprechenden Durchmesser, andererseits aber durch dieses die Hauptecken 11 hintergreifenden Kunststoffmaterial eine bessere Festlichkeit gerade bezüglich Drehmomentbelastungen gegeben.

Die Einpressöffnung 21 weist im Haltebereich nach dem Einpressen des Halteelements ein Flächenquerschnittsmaß auf, welches maximal 7% größer ist als das Flächenquerschnittsmaß der Einpressöffnung 21 vor dem Einpressen, vorzugsweise weniger als 3,5% größer ist. So wird es möglich, dass das Flächenquerschnittsmaß der Einpressöffnung 21 vor dem Einpressen zwischen 25 bis 60 % des Flächenquerschnittsmaß des Kunststoffdom 2) entspricht, also ein verhältnismäßig großes Halteelement in Bezug auf das Flächenquerschnittsmaß des Kunststoffdoms verwendet werden kann, ohne dass die Gefahr besteht, dass die Wandung des Kunststoffdoms reißt.

Figur 2B skizziert nun einen Schnitt durch den Kunststoffdom 22 mit dem eingepressten Halteelement 1. Um die Wirkung des Halteelements 1 beim Einpressen und die Verformung der Öffnung 21 noch besser zu veranschaulichen, wurde in Figur 2C noch skizzenhaft Einblick in die Öffnung 21 dargestellt, bei welcher das Halteelement 1 wieder entfernt wurde. Deutlich zu erkennen sind dabei diejenigen Bereiche 221, in denen sich die Hauptecken 11 in die Wand der Öffnung 21 eingeschnitten haben als auch die Bereiche 222, bei welchem sich entsprechend verdrängtes Material zusätzlich aufgebaut hat, so dass dort der untere Rand 25 sogar teils überdeckt sein kann.

Die Figur 3 zeigt nun nochmals die bereits in den Figuren 1 und 2 beschriebene Ausgestaltung mit 3 Hauptecken sowie den besonders bevorzugten Zwischenecken.

Die Figur 4 skizziert hingegen eine nicht zur Erfindung gehörende Ausgestaltung mit in diesem Falle 4 Hauptecken, welche zwar ebenfalls abgerundet, ansonsten aber mit geraden Kanten 12 verbunden sind.

Die Figur 5 skizziert noch eine weitere nicht zur Erfindung gehörende Ausgestaltung mit nun mehr 5 Hauptecken, welche in Form eines regelmäßigen Fünfeckes jeweils um 72° zueinander versetzt angeordnet und wiederum abgerundet sind, wobei auch hier die den Hauptecken 11 jeweils gegenüberliegenden Kanten 12 jeweils gerade ausgeführt sind.

In allen Fällen sorgen die Hauptecken 11 jeweils für einen entsprechenden Einschnitt in den Randbereich der Öffnung 21 im Kunststoffgehäuse und zu einem entsprechenden verdrängen von Material in die benachbarten Wandbereiche. Würde man jedoch die Anzahl der Hauptecken 11 über 5 hinaus weiter erhöhen, wird die entstehende Außenumfangsform zunehmend kreisähnlicher und die von den Hauptecken 11 in der greifbaren Wandbereiche noch kleiner, so dass die maßgebliche erfinderische Wirkung nur noch unzureichend eintritt und daher eine Anzahl von Hauptecken größer 5 ungeeignet erscheint.

Die Figuren 6A bis 6C skizzieren nun im Folgenden anhand von Beispielen mit jeweils 3 Hauptecken den besonderen Einfluss der Gestaltung der Kanten für die jeweils kritischen minimalen Dicken des Halteelements einerseits als auch andererseits des Kunststoffgehäuses, insbesondere des Kunststoffdoms.

Gehen wir für alle 3 Beispiele von einem einheitlichen Innendurchmesser D13, sowie einem einheitlichen theoretischen Kreisdurchmesser über die Hauptecken D33 aus, so ergibt sich eine deutlich geringere minimale Wandstärke des Halteelements D123. Um eine ausreichende Festigkeit des Halteelements zu er zielen, darf eine min. Wandstärke nicht unterschritten werden.

Bedenkt man, dass die Öffnung 13 beispielsweise eine Bohrung zur Aufnahme einer selbstschneidenden Schraube 3 oder einer mit einem Innengewinde ausgestaltet und zum Eindrehen in einer Schraube 3 dient, wird klar, dass eine entsprechende mechanische Belastung auf dieser Wanddicke D123 liegt. Aus gegebenem Innendurchmesser D13 und Mindest-Wandstärke D123 ergibt sich der Durchmesser D33. Dieser muss bei Variante A (nicht zur Erfindung gehörend) deutlich größer ausfallen als bei B und C. Hierdurch muss auch der Kunststoffdom entsprechend größer werden.

In Figur 6B sind die drei Hauptecken (11) durch Kanten (12) verbunden, welche jeweils zwei stumpfwinklige Zwischenecken (14) und gerade Zwischenabschnitte 124 aufweisen, so dass die Gesamtform der Kanten 12 jeweils konvex gewölbt geformt sind. Die Zwischenecken 14 sind hier vorzugsweise in jeweils identischen Abstand zu den Hauptecken 11 angeordnet, wobei anstelle der hier in Figur 6 die gezeigten 2 Zwischenecken 14 auch eine Ausgestaltung mit nur einer Zwischenecke oder sogar 3 Zwischenecken denkbar wäre, wobei die Zwischenecken 14 jeweils stumpfwinkliger als die Hauptecken 11 sind.

Figur 6C (nicht zur Erfindung gehörend) skizziert hingegen eine kontinuierlich konvex nach außen gewölbte Kante 122, welche ebenfalls gegenüber der geraden Kante 121 in Figur 6A eine größere minimale Wanddicke D123c>D123a ermöglicht.

Figur 7 skizziert nun noch einmal einen Schnitt durch den Befestigungsbereich eines Gehäuses einer elektronischen Baugruppe bestehend aus einem Kunststoffgehäuseteil 2 mit einem Kunststoff-Dom 22, in welchen ein erfindungsgemäßes metallisches Halteelement 1 eingepresst ist. Das Gehäuse wird auf der gegenüberliegenden Seite durch 2. Gehäuseteil 5 verschlossen, wobei dieses Gehäuseteil beispielsweise auch metallisch ausgebildet sein kann. Diese beiden Gehäuseteile 2 und 5 werden durch eine Schraube 3 miteinander verbunden, welche in das Halteelement 1 ein geschraubt ist. Zwischen dem 2. Gehäuseteil 5 und dem 1. Gehäuseteil 2 bzw. dem Rand 16 des Halteelements 1 ist zudem eine Leiterplatte 4 mit elektronischen Bauelementen vorgesehen und ebenfalls dort befestigt. Alternativ zu dieser Ausgestaltung mit einer Schraube 3 wäre auch eine Befestigung mittels Nieten denkbar. Das Halteelement 1 ist im Haltebereich 111 frei von Hinterschnitten und weist in Achsrichtung X eine Länge auf, welche kürzer ist als die Länge der Öffnung im Kunststoffdom 22.

Figur 8 skizziert hingegen noch eine weitere Ausgestaltung mit einem mit dem Halteelement 1 verbundenen Zapfen (17) mit einem Außengewinde, wobei der Befestigungsbereich 111 des Halteelements 1 wiederum die vorstehend bereits näher erläuterte Querschnittsform aufweist. Auch diese Ausgestaltung eignet sich dafür, dass das Halteelement (1) aus einem bleifreien, metallischen Material und durch Kaltschlagmassivumformung hergestellt ist.

## Patentansprüche

1. Metallisches Haltelement (1) zum Einpressen in eine Öffnung eines Kunststoffgehäuses (2) und Aufnehmen bzw. Einleiten eines Drehmoments im Kunststoffgehäuse (2), wobei
das Haltelement im Haltebereich (111)
frei von konkaven Einschnitten oder Einkerbungen oder Hinterschnitten ist sowie in seiner Querschnittsform drei Hauptecken (11) aufweist, welche untereinander über konvexe Kanten (12) miteinander verbunden sind, wobei die Kanten (12) jeweils durch eine oder mehrere stumpfwinklige Zwischenecken (14) konvex gewölbt geformt sind, wobei
das Halteelement (1) aufweist:
a) eine zylindrische Bohrung (13) mit einem vorgegebenen Untermaß zur Aufnahme einer selbstschneidenden Schraube (3) oder
b) ein Innengewinde oder
c) einen mit dem Halteelement verbundenen Zapfen (17) mit einem Außengewinde.

2. Metallisches Haltelement nach Anspruch 1, **dadurch gekennzeichnet, dass** das Halteelement (1) aus einem bleifreien, metallischen Material und durch Kaltschlagmassivumformung hergestellt ist.

3. Metallisches Haltelement nach einem der vorangehenden Ansprüche, **dadurch gekennzeichnet, dass** die Hauptecken (11) abgerundet sind, wobei vorzugsweise der Rundungsbereich der Hauptecke (11) maximal 25% der Länge der Kante (12) zwischen den Hauptecken beträgt.

4. Metallisches Haltelement nach einem der vorangehenden Ansprüche, **dadurch gekennzeichnet, dass** in Richtung der Mittelachse (X) das Halteelement auf einer Seite einen Einführbereich (115) mit einem sich nach innen zur Mittelachse (X) hin verjüngenden (15) Außenumfang aufweist.

5. Metallisches Haltelement nach einem der vorangehenden Ansprüche, **dadurch gekennzeichnet, dass** in Richtung der Mittelachse (X) das Halteelement auf einer Seite einen Randbereich (116) mit einem von der Mittelachse nach außen verlaufenden Rand (16) aufweist, dessen Außenumfang größer ist als im Haltebereich (111).

6. Kunststoffgehäuse mit einem Haltelement nach einem der vorangehenden Ansprüche.

7. Kunststoffgehäuse nach Anspruch 6 mit einer vor dem Einpressen des Halteelements zylinderförmigen Einpressöffnung und einem in diese Einpressöffnung eingepressten Halteelement nach einem der vorangehenden Ansprüche 1 bis 5.

8. Kunststoffgehäuse nach Anspruch 6 oder 7, wobei die Einpressöffnung (21) im Haltebereich nach dem Einpressen des Halteelements ein Flächenquerschnittsmaß aufweist, welches maximal 7% größer ist als das Flächenquerschnittsmaß der Einpressöffnung (21) vor dem Einpressen, vorzugsweise weniger als 3,5% größer ist.

9. Kunststoffgehäuse nach einem der Ansprüche 6 bis 8, wobei die Öffnung (21) im Kunststoffgehäuse in einem Kunststoffdom (22) angeordnet ist.

10. Kunststoffgehäuse nach Anspruch 9, wobei die Einpressöffnung (21) vor dem Einpressen ein Flächenquerschnittsmaß aufweist, welches zwischen 25 bis 60 % des Flächenquerschnittsmaß des Kunststoffdom (22) entspricht.

11. Kunststoffgehäuse nach einem der Ansprüche 6 bis 10, **dadurch gekennzeichnet, dass** der Haltebereich (111) des metallischen Haltelements in Richtung der Mittelachse (X) eine Länge aufweist, welche kleiner ist als die entsprechende Länge der vorgesehenen Öffnung (21) im Kunststoffgehäuse.

## Claims

1. Metallic holding element (1) for pressing into an opening in a plastic housing (2) and receiving and/or initiating a torque in the plastic housing (2), wherein the holding element in the holding region (111) is free of concave incisions or notches or undercuts and also
in its cross-sectional shape has three main corners (11), which are interconnected with one another by way of convex edges (12), wherein each of the edges (12) is shaped in a convexly curved manner by one or more obtuse-angled intermediate corners (14),
wherein
the holding element (1) has:
a) a cylindrical bore (13) with a predefined undersize for receiving a self-tapping screw (3) or
b) an internal thread or
c) a pin (17) which is connected to the holding element and has an external thread.

2. Metallic holding element according to Claim 1, **characterized in that** the holding element (1) is produced from a lead-free, metallic material and by cold massive forming.

3. Metallic holding element according to either of the preceding claims, **characterized in that** the main corners (11) are rounded, wherein preferably the rounded region of the main corner (11) is at most 25% of the length of the edge (12) between the main corners.

4. Metallic holding element according to one of the preceding claims, **characterized in that**, in the direction of the centre axis (X), the holding element on one side has an insertion region (115) with an outer circumference which tapers (15) inwardly towards the centre axis (X).

5. Metallic holding element according to one of the preceding claims, **characterized in that**, in the direction of the centre axis (X), the holding element on one side has an edge region (116) with an edge (16) which runs outwardly from the centre axis and the outer circumference of which is larger than in the holding region (111).

6. Plastic housing with a holding element according to one of the preceding claims.

7. Plastic housing according to Claim 6 with a press-in opening which is cylindrical before the holding element is pressed in and a holding element, pressed in this press-in opening, according to one of the preceding Claims 1 to 5.

8. Plastic housing according to Claim 6 or 7, wherein, in the holding region and after pressing in the holding element, a cross-sectional dimension of the surface area of the press-in opening (21) is at most 7% larger than the cross-sectional dimension of the surface area of the press-in opening (21) before the pressing-in operation, preferably is less than 3.5% larger.

9. Plastic housing according to one of Claims 6 to 8, wherein the opening (21) in the plastic housing is arranged in a plastic mandrel (22).

10. Plastic housing according to Claim 9, wherein, before the pressing-in operation, a cross-sectional dimension of the surface area of the press-in opening (21) corresponds to between 25 to 60% of the cross-sectional dimension of the surface area of the plastic mandrel (22).

11. Plastic housing according to one of Claims 6 to 10, **characterized in that**, in the direction of the centre axis (X), the holding region (111) of the metallic holding element has a length which is smaller than the corresponding length of the opening (21) provided in the plastic housing.

## Revendications

1. Élément de retenue métallique (1) destiné à être enfoncé dans une ouverture d'un boîtier (2) en matière synthétique et à recevoir ou injecter un couple dans le boîtier (2) en matière synthétique,
dans la zone de retenue (111), l'élément de retenue étant dépourvu d'incisions ou encoches ou contre-dépouilles concaves et comportant quant à sa forme en coupe transversale trois coins principaux (11) qui sont reliés entre eux et les uns au-dessous des autres par des bords convexes (12), les bords (12) étant chacun bombés de manière convexe par le biais d'un ou plusieurs coins intermédiaires (14) à angle obtus, l'élément de retenue (1) comportant :
a) un alésage cylindrique (13) de sous-dimension spécifiée pour recevoir une vis auto-taraudeuse (3) ou
b) un filetage intérieur ou
c) une broche (17) reliée à l'élément de retenue et comportant un filetage extérieur.

2. Élément de retenue métallique selon la revendication 1, **caractérisé en ce que** l'élément de retenue (1) est réalisé à partir d'un matériau métallique sans plomb et par formage à froid.

3. Élément de retenue métallique selon l'une des revendications précédentes, **caractérisé en ce que** les coins principaux (11) sont arrondis, de préférence la zone arrondie du coin principal (11) étant égale au maximum à 25 % de la longueur du bord (12) entre les coins principaux.

4. Élément de retenue métallique selon l'une des revendications précédentes, **caractérisé en ce que**, en direction de l'axe central (X), l'élément de retenue comporte d'un côté une zone d'insertion (115) dont la circonférence extérieure s'amincit vers l'intérieur (15) en direction de l'axe central (X).

5. Élément de retenue métallique selon l'une des revendications précédentes, **caractérisé en ce que**, en direction de l'axe central (X), l'élément de retenue comporte d'un côté une zone de bord (116) comprenant un bord (16) qui s'étend vers l'extérieur depuis l'axe central et dont la circonférence extérieure est plus grande que dans la zone de retenue (111).

6. Boîtier en matière synthétique comprenant un élément de retenue selon l'une des revendications précédentes.

7. Boîtier en matière synthétique selon la revendication 6 comprenant une ouverture d'enfoncement qui est cylindrique avant d'enfoncer l'élément de retenue et un élément de retenue selon l'une des revendications précédentes 1 à 5 qui est enfoncé dans cette ouverture d'enfoncement.

8. Boîtier en matière synthétique selon la revendication 6 ou 7, l'ouverture d'enfoncement (21) ménagée dans la zone de retenue ayant, après enfoncement de l'élément de retenue, une aire en coupe transversale qui est plus grande au maximum de 7 %, de préférence de moins de 3,5 %, que l'aire en coupe transversale de l'ouverture d'enfoncement (21) avant l'enfoncement.

9. Boîtier en matière synthétique selon l'une des revendications 6 à 8, l'ouverture d'enfoncement (21) du boîtier en matière synthétique étant disposée dans un dôme (22) en matière synthétique.

10. Boîtier en matière synthétique selon la revendication 9, l'ouverture d'enfoncement (21) ayant avant l'enfoncement une aire en coupe transversale qui correspond entre 25 et 60 % de l'aire en coupe transversale du dôme en matière synthétique (22).

11. Boîtier en matière synthétique selon l'une des revendications 6 à 10, **caractérisé en ce que** la zone de retenue (111) de l'élément de retenue métallique a en direction de l'axe central (X) une longueur qui est inférieure à la longueur correspondante de l'ouverture (21) ménagée dans le boîtier en matière synthétique.
